# EUROPEAN PATENT APPLICATION

(11) **EP 1 744 123 A2**
(43) Date of publication of application: **17.01.2007**
(21) Application number: 05019443.0
(22) Date of filing: 07.09.2005
(51) Int. Cl.: G01C 21/36

(54) **Navigational device with improved user interface**

(30) Priority: 14.07.2005 US 181290
(71) Applicant: Garmin Ltd., George Town (KY)
(72) Inventor: Lee, Choy Wai, Olathe Kansas 66062 (US); Moore, Ryan T., Overland Park Kansas 66212 (US); Moore, Scott T., Olathe Kansas 66062 (US); Burrell, Jonathan C., Olathe Kansas 66062 (US); Reeson, Joshua C., Olathe Kansas 66062 (US)
(74) Representative: UEXKÜLL & STOLBERG

(57) **Abstract**

A navigational device comprising navigational electronics and an improved menu-driven user interface. The navigational electronics are operable for receiving navigation signals from a source, for calculating a position of the device as a function of the signals, and for providing directions to a desired location. The user interface is operable for controlling certain functions of the device and includes a rotary wheel that may be moved in two directions with no mechanical limits for selecting at least one of the functions. In preferred forms, the rotary wheel is rotated up or down to highlight functions and then pushed in to selected a highlighted function.

## Description

### BACKGROUND OF THE INVENTION

### 1. FIELD OF THE INVENTION

The present invention relates to navigational systems and devices. More particularly, the invention relates to a navigational device such as a GPS receiver with an improved menu-driven user interface and a simplified main display page.

### 2. DESCRIPTION OF THE PRIOR ART

GPS receivers and other navigational devices remain immensely popular as users continue to wish to know their location and obtain directions to desired locations while traveling via automobile, marine craft and aviation. Such devices are also often used for navigation, location determination, and pace-setting while hiking, walking, and running.

A typical navigational device includes GPS electronics or other hardware and software for determining the location of the device, route calculating software or firmware for calculating directions to a desired destination, a display for displaying the location and the directions, and some type of user interface for controlling operation of the navigational electronics and display.

Unfortunately, the user interfaces in many prior art navigational devices are cumbersome, confusing, and space-consuming and therefore detract from the usefulness of their associated navigational devices. For example, one type of user interface incorporated into many navigational devices is a touchscreen display. While touchscreen displays reduce or eliminate the need for separate control buttons, they cloud and sometimes entirely block the display of navigational information due to fingerprints and smudges. Touchscreen displays also provide little or no tactile feel or feedback that informs a user that a control function has been implemented. Users therefore have to visually inspect a touchscreen display to ensure that a control function has been completed. Users also often accidentally press the wrong portion of a touchscreen display and trigger an undesired control function.

Other types of navigational devices incorporate a plurality of pushbuttons or other manually activated switches as user interfaces. While such pushbuttons and switches provide more tactile feel and feedback than touchscreen displays, each pushbutton or switch typically controls only one or a few functions, thus necessitating a large number of buttons and switches to activate all the functions of a navigational device. For example, it is common for a navigational device to include a small keypad; a rocker type switch with up, down, left, and right arrows as well as a selector button; a power switch, and various other buttons and switches. These buttons and switches crowd their associated navigational devices and make them confusing to use.

Another limitation of prior art navigational devices is that they have so many functions, and display so much information, that many users have trouble using and understanding the operation of the devices. This is especially true for new and inexperienced users who are just becoming exposed to the advantages of navigational devices.

Accordingly, there is a need for a navigational device with an improved user interface that overcomes the limitations of the prior art.

### SUMMARY OF THE INVENTION

The present invention solves the above-described problems and provides a distinct advance in the art of navigational devices. More particularly, the present invention provides a navigational device with an improved menu-driven user interface that does not require contact with the device's display screen. The user interface also provides tactile feel and feedback without the use of multiple dedicated control buttons and switches. The present invention also provides a navigational device with a simplified main page that facilitates easy use and understanding of the device.

A navigational device constructed in accordance with one embodiment of the present invention broadly comprises navigational electronics and an improved menu-driven user interface. The navigational electronics are operable for receiving navigation signals from a source thereof, for calculating a position of the device as a function of the signals, and for providing directions to a desired location. The user interface is operable for controlling certain functions of the device and includes a rotary wheel that may be moved in two directions with no mechanical limits for selecting at least one of the functions. In preferred forms, the rotary wheel is rotated up or down to select functions of the device, but it may be rotated, rolled, spun, or otherwise moved in any two directions without departing from the scope of the present invention.

After the rotary wheel has been rotated up or down to highlight or otherwise mark a function of the device, it can then be pushed to execute the highlighted or marked function. The rotary wheel may also be rotated up or down to zoom in and out of a displayed map, to set the volume of a speaker, or to adjust the brightness of the display. The rotary wheel may also be pressed and held to save a current location as a waypoint or other point of interest.

The user interface may also include a manually selectable input that may be operated to return to a previously selected or viewed function. Each time the manually selectable input is pressed, the display screen returns to the immediate preceding function or step. The manually selectable input may also be pressed down and held to return to the main page. In preferred forms, the manually selectable input is a pushbutton switch, but it may be any other type of mechanical input device.

The rotary wheel and pushbutton switch together allow a user to view and then execute every function of the navigational device with only two inputs. This reduces the number of required pushbuttons and other switches and therefore enhances the layout and appearance of the device. The rotary wheel and pushbutton switch also provide more tactile feel and feedback than a touchscreen display, do not interfere with the viewing of maps and other information on the display, and are more intuitive for many users.

A navigational device constructed in accordance with another preferred embodiment of the present invention broadly comprises a housing having a front face; navigational electronics enclosed within the housing; and a display screen positioned on the front face of the housing. The navigational electronics and display are configured for presenting a main page which contains information relating to only two primary navigational functions of the device. The preferred primary navigational functions include a "Where To" function that permits selection of a desired destination and provides directions to go to the desired destination, and a "View Map" function that displays a map which shows the location of the device and directions to a desired destination.

The simplified main page provides immediate access to the two most commonly used functions of the navigational device. This permits a user to immediately begin using the navigational device with little or no training and/or preparation. This also permits more experienced users to more quickly and conveniently access the most popular functions of the navigational device.

Other embodiments of the present invention may include both the rotary wheel and pushbutton switch user interface and the simplified main page and/or other features described herein. These and other important aspects of the present invention are described more fully in the detailed description below.

### BRIEF DESCRIPTION OF THE DRAWING FIGURES

A preferred embodiment of the present invention is described in detail below with reference to the attached drawing figures, wherein:
Fig. 1 is a schematic view of a Global Positioning System (GPS) that may be used to implement a preferred embodiment of the present invention.
Fig. 2 is a block diagram of some of the components of a navigational device constructed in accordance with a preferred embodiment of the present invention.
Fig. 3 is a perspective view of a navigational device constructed in accordance with a preferred embodiment of the present invention.
Fig. 4 is another perspective view of the navigational device of Fig. 3.
Fig. 5 is a perspective view of a navigational device constructed in accordance with another preferred embodiment of the present invention.
Fig. 6A is a sample screen display or page of the navigational device.
Fig. 6B is another sample screen display or page of the navigational device.
Fig. 6C is another sample screen display or page of the navigational device.
Fig. 6D is another sample screen display or page of the navigational device.
Fig. 6E is another sample screen display or page of the navigational device.
Fig. 6F is another sample screen display or page of the navigational device.
Fig. 7A is another sample screen display or page of the navigational device.
Fig. 7B is another sample screen display or page of the navigational device.
Fig. 7C is another sample screen display or page of the navigational device.
Fig. 7D is another sample screen display or page of the navigational device.
Fig. 7E is another sample screen display or page of the navigational device.
Fig. 7F is another sample screen display or page of the navigational device.
Fig. 8A is another sample screen display or page of the navigational device.
Fig. 8B is another sample screen display or page of the navigational device.
Fig. 8C is another sample screen display or page of the navigational device.
Fig. 9 is a front view of a navigational device constructed in accordance with a preferred embodiment of the invention and showing a sample map and route instructions.
Fig. 10A is another sample screen display or page of the navigational device.
Fig. 10B is another sample screen display or page of the navigational device.
The drawing figures do not limit the present invention to the specific embodiments disclosed and described herein. The drawings are not necessarily to scale, emphasis instead being placed upon clearly illustrating the principles of the invention.

### DETAILED DESCRIPTION OF THE PREFERRED EMBODIMENTS

The following detailed description of the invention references the accompanying drawings which illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims, along with the full scope of equivalents to which such claims are entitled.

The present invention relates to navigational systems and devices having route generation capabilities. One such type of navigational system includes Global Positioning Systems (GPS). Such systems are are known and have a variety of uses. In general, GPS is a satellite-based radio navigation system capable of determining continuous position, velocity, time, and direction information for an unlimited number of users. Formally known as NAVSTAR, the GPS incorporates a plurality of satellites which orbit the earth in extremely precise orbits. Based on these precise orbits, GPS satellites can relay their location to any number of receiving units.

The GPS system is implemented when a device specially equipped to receive GPS data begins scanning radio frequencies for GPS satellite signals. Upon receiving a radio signal from a GPS satellite, the device can determine the precise location of that satellite via one of different conventional methods. The device will continue scanning for signals until it has acquired at least three different satellite signals. Implementing geometrical triangulation, the receiver utilizes the three known positions to determine its own two-dimensional position relative to the satellites. Acquiring a fourth satellite signal will allow the receiving device to calculate its three-dimensional position by the same geometrical calculation. The positioning and velocity data can be updated in real time on a continuous basis by an unlimited number of users.

Although GPS enabled devices are often used to describe navigational devices, it will be appreciated that satellites need not be used to determine a geographic position of a receiving unit since any receiving device capable of receiving the location from at least three transmitting locations can perform basic triangulation calculations to determine the relative position of the receiving device with respect to the transmitting locations. For example, cellular towers or any customized transmitting radio frequency towers can be used instead of satellites. With such a configuration, any standard geometric triangulation algorithm can be used to determine the exact location of the receiving unit. In this way, personal hand held devices, cell phones, intelligent appliances, intelligent apparel, and others can be readily located geographically, if appropriately equipped to be a receiving unit.

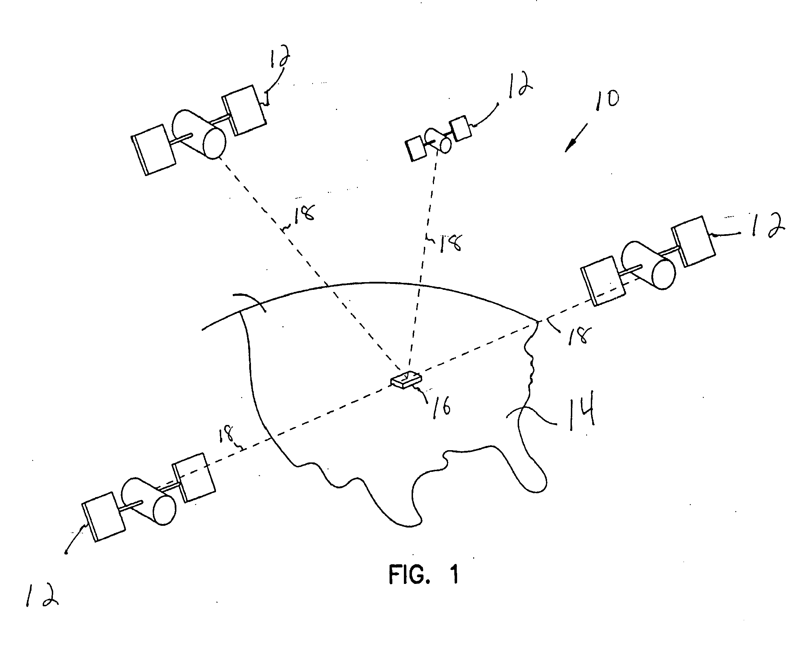

Fig. 1 shows one representative view of a GPS denoted generally by reference numeral 10. A plurality of satellites 12 are in orbit about the Earth 14. The orbit of each satellite 12 is not necessarily synchronous with the orbits of other satellites and, in fact, is likely asynchronous. A GPS receiver device 16 such as the ones described in connection with preferred embodiments of the present invention is shown receiving spread spectrum GPS satellite signals 18 from the various satellites.

The spread spectrum signals 18 continuously transmitted from each satellite 12 utilize a highly accurate frequency standard accomplished with an extremely accurate atomic clock. Each satellite 12, as part of its data signal transmission, transmits a data stream indicative of that particular satellite. The GPS receiver device 16 must acquire spread spectrum GPS satellite signals 18 from at least three satellites 12 for the GPS receiver device 16 to calculate its two-dimensional position by triangulation. Acquisition of an additional signal, resulting in signals from a total of four satellites, permits the GPS receiver device 16 to calculate its three-dimensional position.

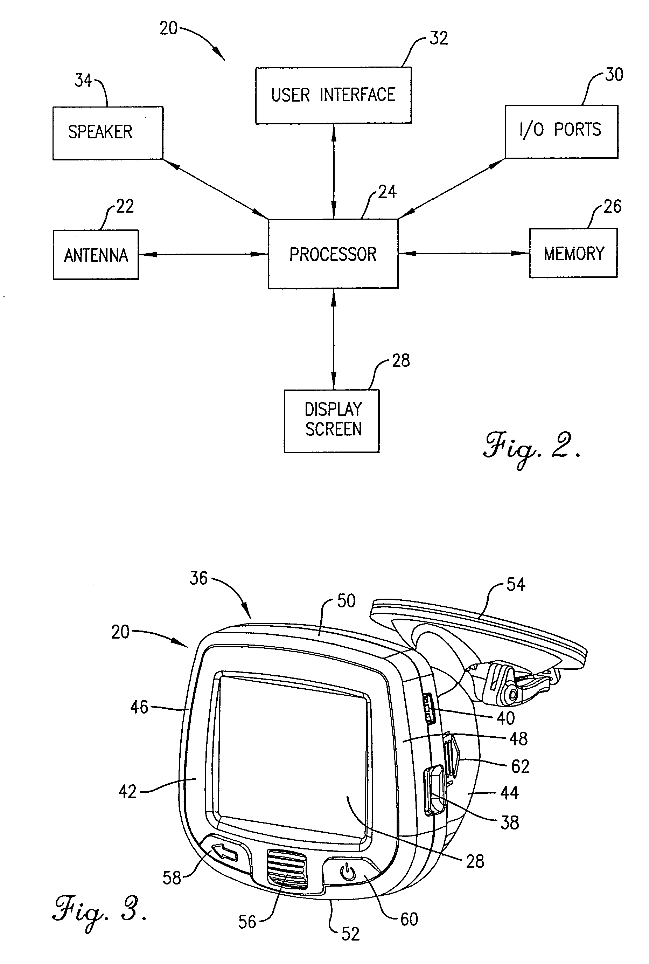

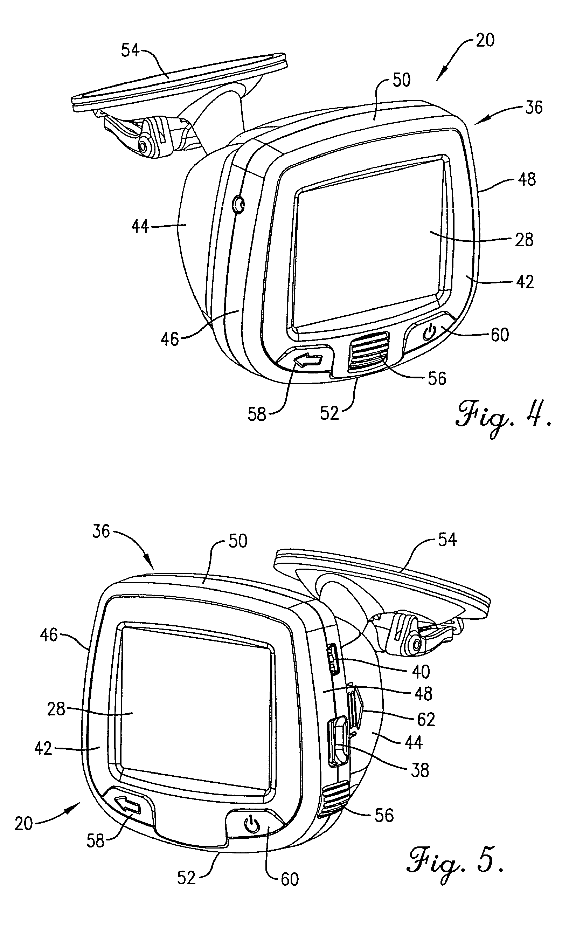

The navigational devices of the present invention can be utilized in any number of implementations such as in an automobile, marine craft, airplane, or while carried during walking, hiking, or running. As illustrated in Fig. 2, a navigational device 20 constructed in accordance with a preferred embodiment of the present invention may include navigational electronics such as an antenna 22, a processor 24, and memory 26; a display screen 28; one or more input/output (I/O) ports 30; a menu-driven user interface 32; and a speaker 34. The navigational device may also include a microphone for receiving voice commands, an infrared port for wirelessly receiving and transmitting data and other information from and to nearby electronics, and other information, and even a cellular or other radio transceiver for wirelessly receiving and transmitting data from and to remote devices. For example, the radio transceiver may permit the navigation device 20 to communicate with a remote server with cartographic map data and other information stored thereon. These components are housed within or on a protective housing 36 as illustrated in Figs. 3-5.

The antenna 22 is operable for receiving navigational signals such as GPS signals 18 from the GPS satellites 12 illustrated in Fig. 1. The antenna 22 is preferably a GPS patch antenna or helical antenna but may be any other type of antenna that can be used with navigational devices. The antenna 22 may be mounted directly on or in the housing 36 or may be mounted external to the housing such as on the exterior of a vehicle.

The processor 24 is operable to receive the navigational signals from the antenna 22 and to calculate a position of the device as a function of the signals. The processor is also operable to calculate a route to a desired location, provide instructions to navigate to the desired location, display maps and other information on the display screen 28, and to execute other functions described herein.

The memory 26 is coupled with the processor 24 for storing information accessed and/or generated by the processor. For example, the memory 26 may store cartographic data used by the processor 24 and location and routing data generated by the processor. The memory 26 may be integral with the processor, stand-alone memory, or a combination of both. The memory may include, for example, removable TransFlash cards as described below.

The display screen 28 is coupled with the processor 24 for displaying location information and directions generated by the processor and menu information as described below. The display screen 28 is preferably an LCD display capable of displaying both text and graphical information. One example of a display that may be used with the present invention is a QCIF (220x176) transflective TFT display with 64K of colors and a bright white LED backlight. As illustrated in Figs 3-5, the display screen 28 is positioned on a front face of housing 36 for easy viewing.

The I/O ports 30 permit data and other information to be transferred to and from the processor 24. As illustrated in Figs. 3 and 5, the I/O ports may include a TransFlash card slot 38 for receiving removable TransFlash cards and a USB port 40 for coupling with a USB cable connected to another computing device such as a personal computer. Navigational software, cartographic maps and other data and information may be loaded in the navigational device 20 via the I/O ports 30, the wireless transceivers, or the infrared port mentioned above.

The user interface 32 is operable for controlling certain functions of the device and is described in more detail below. The speaker 34 provides audible instructions such as audible turn-by-turn instructions under the direction of the processor.

The components shown in Fig. 2 and described above need not be physically connected to one another since wireless communication among the various depicted components is permissible and intended to fall within the scope of the present invention.

Some of the components of the navigational device 20 can also be embodied as computer hardware circuitry or as a computer-readable program, or a combination of both. More specifically, the programs can be structured in an object-orientation using an object-oriented language such as Java, Smalltalk, C++, and others, and the programs can be structured in a procedural-orientation using a procedural language such as C, PASCAL, and others. The software components communicate in any of a number of means that are well-known to those skilled in the art, such as application program interfaces (A.P.I.) or interprocess communication techniques such as remote procedure call (R.P.C.), common object request broker architecture (CORBA), Component Object Model (COM), Distributed Component Object Model (DCOM), Distributed System Object Model (DSOM) and Remote Method Invocation (RMI). Any programming methodology, programming language, programming interface, operating system, or computing environment, now known or hereafter developed, can be readily deployed, without departing from the tenets of the present invention and all such implementation specific embodiments are intended to fall within the broad scope of the present invention.

The housing 36 is preferably formed of impact resistant plastic but may be formed of any suitable material. As illustrated in Figs. 3-5, the housing 36 includes a front face or frame 42 and a rear portion 44 joined to the front face 42. The intersection of the front face 42 and rear portion 44 defines a left side 46, a right side 48, a top side 50 and a bottom side 52. In one embodiment, the housing is approximately 3" wide, 2.75" high, and 2.15" deep and weighs approximately 4.3 ounces without batteries. However, the particular size, weight and configuration of the housing may be changed without departing from the scope of the present invention.

The housing 36 may be supported to a vehicle windshield, dashboard or other surface with a suction cup mount 54 such as the one described in co-pending patent application serial number 11/181,261, entitled SEPARABLE BALL AND SOCKET ASSEMBLY FOR ELECTRONIC DEVICE MOUNTS, filing date July 14,2005. This co-pending application is hereby incorporated into the present application by reference.

In accordance with one important aspect of the present invention, the user interface 32 includes a rotary wheel 56 that may be rotated or otherwise moved for selecting between the various functions of the navigational device 20. The rotary wheel 56 can be moved in at least two directions with no mechanical stops or limits. In preferred forms, the rotary wheel is rotated up or down to select functions of the device, but it may also be rotated, rolled, spun, or otherwise moved in any two directions with no mechanical stops or limits without departing from the scope of the present invention.

After the rotary wheel 56 has been rotated up or down to scroll between and highlight or otherwise mark a function of the device, it can then be pushed to execute a highlighted or marked function. The rotary wheel 56 may also be rotated up or down to zoom in or out of a displayed map, pressed and held to save a current location as a waypoint or other point of interest, and rotated up or down to control the volume, brightness, and other settings of the navigational device as described in more detail below.

In addition to the rotary wheel 56, the user interface 32 also preferably includes a manually selectable input 58 that may be operated to return to a previously selected or viewed function. The manually selectable input 58 is preferably a pushbutton switch, but it may be any type of manual input device. The pushbutton switch 58 may be pressed to return to a preceding function or step, or pressed and held to return to a main page described below.

The rotary wheel 56 and pushbutton switch 58 together allow a user to view and then execute every function of the navigational device with only two inputs. This reduces the number of required pushbuttons and other switches and therefore enhances the layout and appearance of the navigational device. The rotary wheel 56 and pushbutton switch 58 also provide more tactile feel and feedback than a touchscreen display, do not interfere with the viewing of maps and other information on the display 28, and are more intuitive for many users.

The rotary wheel 56 and pushbutton switch 58 are preferably positioned on the front face 42 of the housing 36 below the display screen 28 as illustrated in Figs. 3 and 4. However, the rotary wheel 56 and pushbutton switch 58 can be located elsewhere on the navigational device without departing from the scope of the invention. For example, the rotary wheel 56 may be positioned along one side of the housing 36 as illustrated in Fig. 5, on the front face of the housing above the display screen, or even on the rear face of the housing. Similarly, the pushbutton switch 58 can be positioned on one of the sides or rear face of the housing or above or below the display on the front face of the housing.

As illustrated in Figs. 3-5, the navigational device 20 also includes a pushbutton on/off or power switch 60 that connects the electronic components shown in Fig. 2 to a suitable power source such as one or more batteries. The power switch 60 is preferably positioned adjacent the rotary wheel 56 on the front face of the housing below the display screen 28 but may be positioned elsewhere on the device. The TransFlash card slot 38 and the USB port 40 are preferably positioned along one side of the housing as best illustrated in Figs. 3 and 5.

### OPERATION

To operate the navigational device 20, batteries are first installed in a battery compartment 62, in the housing 36, or the navigational device is connected to another power source. Navigation software may be installed on the navigational device 20 via the USB port 40 which can be connected to an external computer in a conventional manner. Similarly, cartographic maps and other navigational data can be installed via the USB port 40 or the TransFlash slot 38. The navigational device 20 may then be mounted to a windshield or other solid surface with the suction cup mount 54 or may be simply carried by a user.

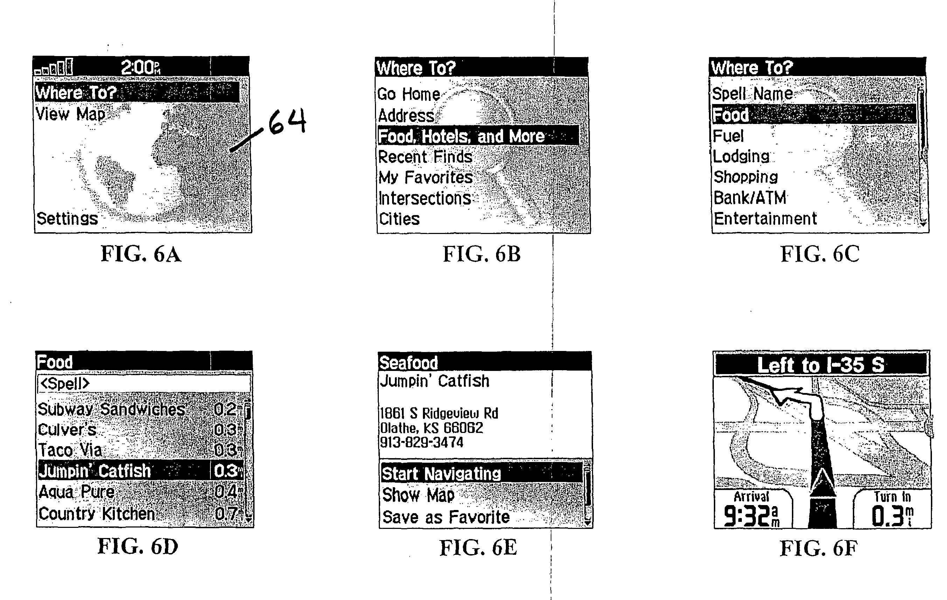

The navigational device 20 is then turned on by simply pressing and holding the power switch 60. In accordance with another important aspect of the present invention, the navigational device 20 displays a simplified main page 64 illustrated in Fig. 6A when turned on. The main page 64 preferably contains menu information relating to only two primary navigational functions of the device. As illustrated in Fig. 6A, the main page preferrably displays a tab or menu item for a "Where To" function that permits selection of a desired destination and provides navigational instructions to go to the desired destination, and a tab or menu item for a "View Map" function that displays a map which shows the location of the device and navigational instructions to navigate to a desired destination. Both of these functions, as well as other functions of the navigational device 20, are described in more detail below.

The simplified main page 64 provides immediate access to the two most commonly used functions of a navigational device. This permits a user to immediately begin using the navigational device with little or no training and/or preparation. This also permits more experienced users to more quickly and conveniently access the most popular functions of the navigational device.

Returning to Fig. 6A, a user may manipulate the rotary wheel 56 to either highlight the "Where To" or the "View Map" functions and then press in on the rotary wheel 56 to select the highlighted function. If the "Where To" tab is selected, the screen shown in Fig. 6B is displayed. This screen permits the user to select between several categories of destinations. For example, if the user selects the category of "Food, Hotels and More", the screen shown in Fig. 6C is displayed which permits the user to select between several subcategories. If the user selects the subcategory "Food", the screen shown in Fig. 6D is displayed which permits the selection of a particular food establishment.

The screen shown in Fig. 6E then shows the address of the selected food establishment and permits the user to either "Start Navigating", "Show Map", or "Save as Favorite". If the user elects to "Start Navigating", the screen shown in 6F is displayed to route the user to the desired destination using a map. As the user travels along the route, the user's current location is updated and the user is provided with audible prompts, text directions, and turn arrows which guide the user to the destination. If the user departs from the calculated route, the processor 24 automatically recalculates a new route and provides new directions.

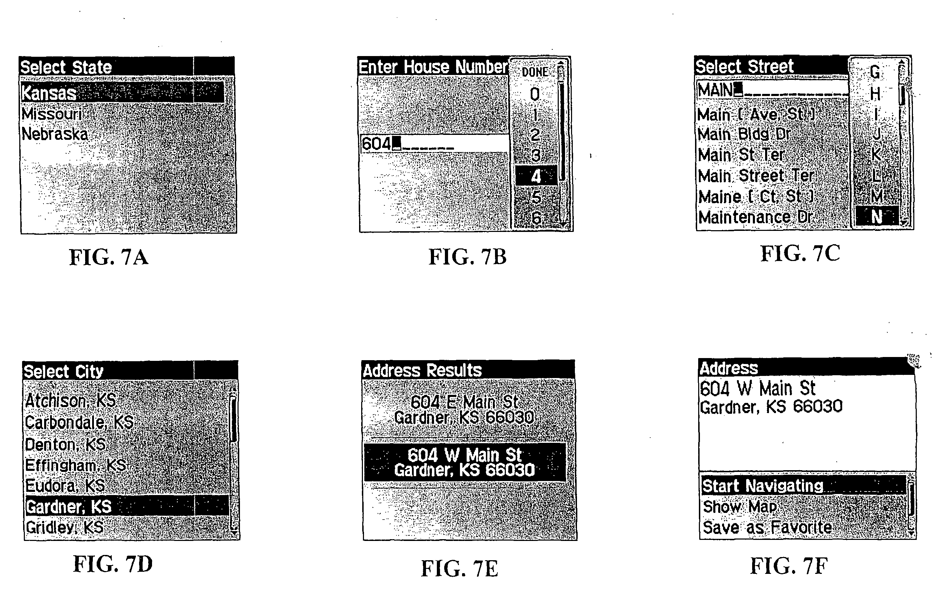

To find a particular address, the user may select "Where To" from the main page 64, and then select "Address" from the screen shown in Fig. 6B. The screen display of Fig. 7A then permits the user to select a state (or country if used in Europe); the screen display of Fig. 7B permits the user to enter a house number; the screen display of Fig. 7C permits the user to select a street name; the screen display of Fig. 7D permits the user to select a city; the screen display of Fig. 7E permits the user to select an address which most closely matches the entered address; and the screen display of Fig. 7F permits the user to select either "Start Navigating", "Show Map", or "Save as Favorite" as described above. These screen displays of Fig. 7, as well as the other screen displays shown and described herein, are not necessarily displayed in the order described herein

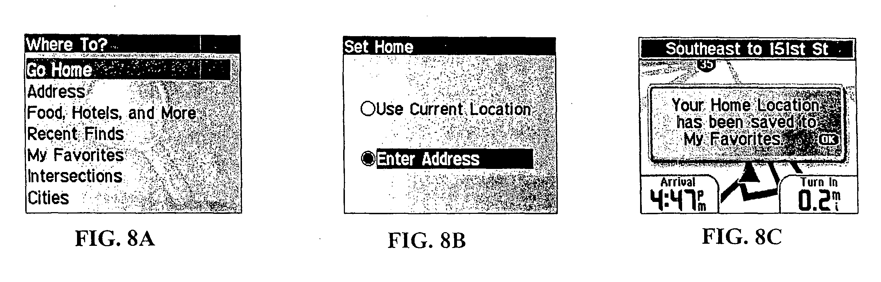

To set a "Home Location" for a place the user returns to most often, the user may select "Where To" from the main page 64, "Go Home" from the screen display of Fig. 8A, and then either select "Use Current Location" or "Enter Address" from the screen display of Fig. 8B. The "Use Current Location" tab sets the current location of the navigational device as the "Home Location" whereas the "Enter Address" tab permits the entry of an address as described in connection with Figs. 7A-7F. The screen display of Fig. 8C then prompts the user to press the rotary wheel to acknowledge the saving of a new "Home Location".

The navigational device 20 also allows a user to find a location from the list in "Food, Hotels, and More" by spelling the name of the location. After a desired location has been identified, the navigational device also allows the user to search for "Nearby Places".

The memory of the navigational device may also store a number of "Recent Finds", which are the names of recently selected locations. The "Recent Finds" page lists the locations in the order in which they were last selected.

The navigational device 20 also displays an "Intersections" tab that may be selected to find a particular intersection and a "Cities" tab that may be selected to search for a particular city.

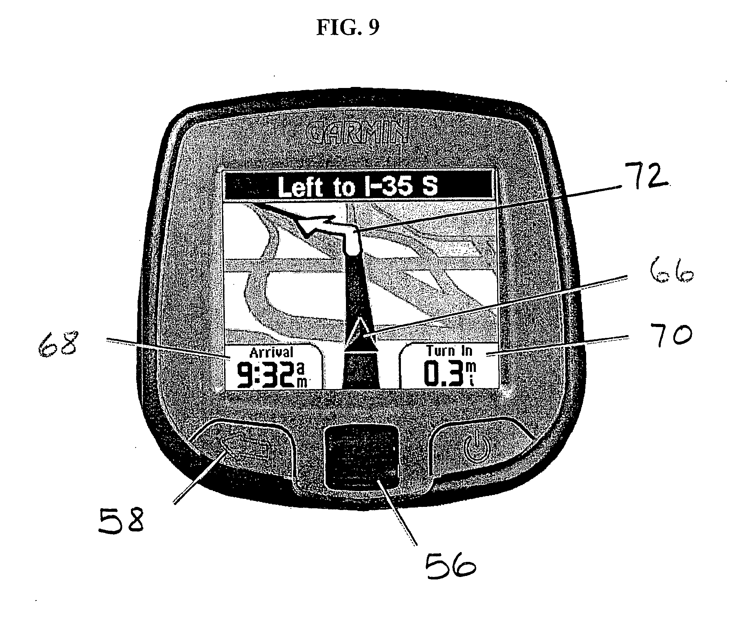

Fig. 9 illustrates in more detail the map which is shown when the "View Map" tab is selected from the main page 64 or when the "Start Navigating" or "Show Map" functions are selected such as shown in Fig. 7F. The position icon 66 on the display shows the device's current location, a window 68 in the lower left corner of the display indicates the estimated time of arrival at the destination, a window 70 in the lower right corner of the display indicates the distance to the next turn, and a directional arrow 72 points to the destination. As mentioned above, the navigational device 20 may also provide vocal or other audible prompts such as vocal turn-by-turn instructions. The user may return to the main page 64 by pressing and holding the pushbutton switch 58 or may zoom in and out on the map by rotating or rolling the rotary wheel 56 up or down.

While the user is following a route on the map, the user may press and hold the pushbutton switch 58 to return to the main page and then select a "Review Turns" tab to display turn-by-turn instructions for the entire route. This page will display all turns in the route and the distance between turns. To view details about any particular turn, the user may use the rotary wheel 56 to highlight and select the turn.

The navigational device 20 allows a user to stop navigating at any time or to add a detour to a route. An extra stop can also be added to a route as a "Via Point". The navigational device then displays and/or speaks directions to the "Via Point" and then to the final destination.

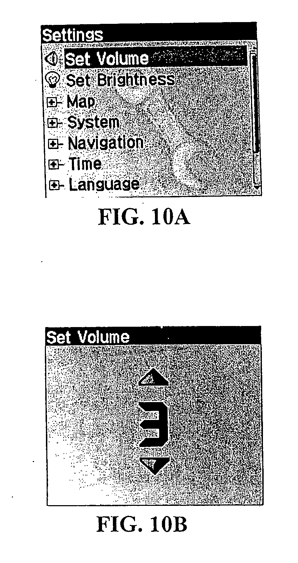

The main page 64 shown in Fig. 6A may also include a "Settings" tab that permits the user to change certain settings. When this tab is selected, the screen display shown in Fig. 10A is displayed. This page permits the user to change a number of settings including speaker volume, screen brightness, map settings, system settings, navigation settings, time settings, and language settings.

If the "Set Volume" tab is selected from Fig. 10A, the screen display of Fig. 10B is shown. The user may then roll or rotate the rotary wheel 56 upward to increase the speaker volume or downward to decrease the speaker volume. As the rotary wheel is rotated, the screen display of Fig. 10B provides a visual indication of the volume level and the speaker provides an audible indication of the volume level. For example, the display may show a volume level of 1-10 and the speaker may provide a voice indication of the volume level that gets progressively louder as the rotary wheel is rotated upwardly and progressively quieter as the rotary wheel is rotated downwardly.

If the "Set Brightness" tab is selected from Fig. 10A, the user may then roll or rotate the rotary wheel 56 upward to increase the brightness or downward to decrease the brightness. As the rotary wheel is rotated, the screen provides a visual indication of the brightness. For example, the screen may become progressively brighter as the rotary wheel 56 is rotated upwardly and progressively dimmer as the rotary wheel is rotated downwardly.

The above systems, devices and methods have been described, by way of example and not by way of limitation. Although specific embodiments have been illustrated and described herein, it will be appreciated by those of ordinary skill in the art that any arrangement which is calculated to achieve the same purpose may be substituted for the specific embodiment shown. This application is intended to cover any adaptations or variations of the present invention. It is to be understood that the above description is intended to be illustrative, and not restrictive. Combinations of the above embodiments, and other embodiments will be apparent to those of skill in the art upon reviewing the above description. The scope of the invention includes any other applications in which the above systems, devices, functional data, and methods are used. The scope of the invention should be determined with reference to the appended claims, along with the full scope of the equivalents to which such claims are entitled.

Having thus described the preferred embodiment of the invention, what is claimed as new and desired to be protected by Letters Patent includes the following:

## Claims

1. A navigational device comprising:
navigational electronics operable for receiving navigation signals from a source thereof and for performing navigational functions; and
a user interface including a manual input that may be moved in two directions with no mechanical limits and operable for selecting at least one of the navigational functions.

2. The navigational device as set forth in claim 1, wherein the navigational functions include calculating a position of the device as a function of the signals, providing directions to a desired location, displaying a map showing the position of the device, looking up directions to destinations, looking up addresses for the destinations, marking waypoints, marking home locations, and navigating between two or more positions.

3. The navigational device as set forth in claim 1, wherein the manual input is a rotary wheel that may be rotated up or down to highlight or otherwise mark one of the navigational functions and pushed to execute the highlighted or marked function.

4. The navigational device as set forth in claim 3, further comprising a display screen for displaying information relating to the navigational functions and a housing for housing the navigational electronics, the user interface, and the display screen.

5. The navigational device as set forth in claim 4, wherein the rotary wheel is positioned on a front face of the housing below the display screen.

6. The navigational device as set forth in claim 4, wherein the rotary wheel is positioned on a front face of the housing above the display screen.

7. The navigational device as set forth in claim 4, wherein the rotary wheel is positioned on a side wall of the housing.

8. The navigational device as set forth in claim 3, the user interface further including a manually selectable input that may be operated to return to a previously selected or viewed navigational function.

9. The navigational device as set forth in claim 8, wherein the manually selectable input is a pushbutton switch.

10. The navigational device as set forth in claim 9, wherein the pushbutton switch is positioned on one side of the rotary wheel.

11. The navigational device as set forth in claim 3, the user interface further including a power switch.

12. The navigational device as set forth in claim 11, wherein the power switch is positioned on one side of the rotary wheel.

13. The navigational device as set forth in claim 1, further including a TransFlash card slot for receiving removable TransFlash cards for use in transferring cartographic data to the navigational electronics.

14. The navigational device as set forth in claim 1, further including a USB port for transferring cartographic data to and from the navigational electronics.

15. The navigational device as set forth in claim 4, further including a speaker for providing audible feedback to a user of the navigational device.

16. The navigational device as set forth in claim 15, wherein the rotary wheel is operable to increase the volume of the speaker when rotated up and to decrease the volume of the speaker when rotated down.

17. The navigational device as set forth in claim 16, wherein the speaker provides an audible indication of its volume that becomes progressively louder as the rotary wheel is rotated up and progressively quieter when the rotary wheel is rotated down.

18. The navigational device as set forth in claim 17, wherein the display screen provides a visual indication of the volume of the speaker as the rotary wheel is rotated up or down.

19. The navigational device as set forth in claim 3, wherein the rotary wheel is operable to increase the brightness of the display screen when rotated up and to decrease the brightness when rotated down.

20. The navigational device as set forth in claim 3, wherein the navigational electronics is operable to display a map on the display screen and wherein the rotary wheel is operable to zoom-in on the map when rotated up and zoom-out when rotated down.

21. A navigational device comprising:
a housing having a front face;
navigational electronics enclosed within the housing for receiving navigational signals from a source thereof and for performing navigational functions including calculating a position of the device as a function of the signals and providing directions to a desired location;
a display screen positioned on the front face of the housing for displaying an indication of the position of the device and the directions to the desired location; and
a user interface for selecting the navigational functions, the user interface including:
a rotary wheel that may be rotated to highlight or otherwise mark one of the navigational functions and then pushed to select the highlighted or marked navigational function, and
a pushbutton switch that may be operated to return to a previously selected or viewed navigational function.

22. The navigational device as set forth in claim 21, wherein the rotary wheel and the pushbutton switch are positioned on the front face of the housing below the display screen.

23. The navigational device as set forth in claim 21, the user interface further including a power switch.

24. The navigational device as set forth in claim 23, wherein the power switch is positioned on one side of the rotary wheel.

25. The navigational device as set forth in claim 21, further including a TransFlash card slot for receiving removable TransFlash cards for use in transferring cartographic data to the navigational electronics.

26. The navigational device as set forth in claim 21, further including a USB port for transferring cartographic data to and from the navigational electronics.
